# EUROPEAN PATENT SPECIFICATION

(11) **EP 1 124 699 B1**
(45) Date of publication and mention of the grant of the patent: **26.02.2003**
(21) Application number: 99955863.8
(22) Date of filing: 20.10.1999
(51) Int. Cl.: B60C 15/05, B29D 30/18

(54) **CARCASS STRUCTURE FOR VEHICLE-WHEEL TYRES AND ITS METHOD OF MANUFACTURING**
REIFENKARKASSEAUFBAU UND VERFAHREN ZU DESSEN HERSTELLUNG
STRUCTURE DE CARCASSE POUR PNEUMATIQUES DE ROUES DE VEHICULE ET SON PROCEDE DE FABRICATION

(30) Priority: 30.10.1998 EP 98830661; 29.12.1998 US 114157 P
(43) Date of publication of application: 22.08.2001
(73) Proprietor: PIRELLI PNEUMATICI Società per Azioni, 20126 Milano (IT)
(72) Inventor: CARETTA, Renato, I-21013 Gallarate (IT)
(74) Representative: Tansini, Elio Fabrizio
(86) International application number: EP9907963
(87) International publication number: WO00026043

(56) References cited:
- EP-A- 0 053 997
- EP-A- 0 467 277
- EP-A- 0 778 161
- EP-A- 0 780 221
- CH-A- 261 443
- FR-A- 1 317 045
- FR-A- 2 055 988
- FR-A- 2 678 544
- US-A- 3 044 523
- US-A- 4 248 287
- PATENT ABSTRACTS OF JAPAN vol. 007, no. 207 (M-242), 13 September 1983 (1983-09-13) & JP 58 105806 A (YOKOHAMA GOMU KK), 23 June 1983 (1983-06-23)

## Description

The present invention relates to a tyre for vehicle wheels of the type comprising the features recited in the preamble of claim 1.

The invention also relates to a method of manufacturing said tyre, said method being of the type comprising the steps recited in the preamble of claim 18.

A tyre and method of such a type are disclosed by document US 3,044,523.

Manufacturing of tyres for vehicle wheels involves formation of a carcass structure essentially consisting of one or more carcass plies substantially having a toroidal conformation and the axially opposite side edges of which being turned back around respective annular reinforcing structures, each of which usually comprises a circumferentially-inextensible metallic annular insert, commonly referred to as "bead core" and a filling of elastomer material coupled with the bead core at a radially outer position.

Applied to the carcass structure, at a circumferentially external position thereof, is a belt structure comprising one ore more belt strips in the form of a closed ring, essentially consisting of textile or metal cords suitably oriented relative to each other and to the cords belonging to the adjacent carcass plies.

A tread band currently consisting of a strip of elastomer material of appropriate thickness is applied to the belt structure, at a circumferentially external position thereof.

It is to point out that, to the aims of the present description, by the term "elastomer material" it is intended a rubber blend in its entirety, that is the assembly made up of a base polymer suitably amalgamated with reinforcing fillers and/or additives of other types.

Finally, to the opposite sides of the tyre being manufactured a pair of sidewalls are applied, each of them covering a side portion of the tyre included between a so-called shoulder region, located close to the corresponding side edge of the tread band, and a so-called bead located at the corresponding bead core.

In accordance with traditional production methods, essentially the above listed tyre components are first made separately from each other to be then assembled during a tyre-manufacturing step.

Production methods have been recently proposed which, instead of resorting to the production of semifinished products, make the carcass structure directly during the tyre-manufacturing step.

For example, US Patent 5,362,343 discloses a method and an apparatus forming a carcass ply starting from a single cord previously wound around a reel that at every operating cycle of the apparatus is cut to size for obtaining a section of preestablished length.

The cord section is transversely laid down on the outer surface of a rigid toroidal support previously coated with a layer of raw rubber, then the section ends are radially applied to the respectively opposite sides of the toroidal support itself.

Repetition of the above described operating cycle leads to deposition of a number of cord sections circumferentially disposed in side by side relationship until the whole circumferential extension of the toroidal support has been covered, so as to define a carcass ply.

For the purpose of manufacturing the annular reinforcing structures, it is also known that close to each of the tyre beads, the opposite ends of the individual cords forming a carcass ply are arranged, in an alternating sequence, at axially opposite positions relative to an annular anchoring element made up of coils of metal wire such disposed as to form concentric circumferences arranged substantially in form of a crown, as can be learnt from patent EP 0 664 231.

In the European patent application EP 0 928 680 in the name of the same Applicant, a method and a tyre are described in which each carcass ply is formed by laying down a plurality of strip-like sections following each other onto a rigid toroidal support, each of said sections comprising a plurality of parallel longitudinal cords incorporated into a layer of elastomer material.

When deposition has been completed, each section substantially extends in a U-shaped conformation around the cross-section outline of the toroidal support, so as to exhibit a crown portion extending transversely of the circumferential extension of the toroidal support itself, according to a given angle, and two side portions extending in the direction of the geometric axis of the toroidal support and partly overlapping the side portion of the previously laid-down section.

After the first carcass ply has been manufactured, the annular reinforcing structures are applied at a radially inner position against the end flaps of the ply itself, each of said reinforcing structures comprising a filling insert of elastomer material of a substantially triangular section, interposed between first and second circumferentially-inextensible annular inserts, each formed of a thread-like element wound in concentric coils substantially in the form of a crown.

Then a second carcass ply is formed and disposed upon the first carcass ply and the annular reinforcing structures, said second carcass ply being obtained by strip-like sections laid down in a crossed orientation with respect to those of the first carcass ply.

In the above mentioned patent application it is highlighted that the crossed orientation of the strip-like sections belonging to the first and second carcass plies respectively, as well as the mutually crossed arrangement of the overlapping regions between the sections belonging to the first and second carcass plies respectively, give the bead and sidewall areas of the tyre excellent features in terms of structural resistance in relation to the effects due to slip thrusts and to the twisting moments transmitted in acceleration and braking.

In accordance with the present invention, it has been found that advantageously optimal qualities of structural resistance can be given to the tyre bead, while keeping a satisfactory lightness in weight and structural flexibility of the carcass structure at the radially outer regions thereof, if, for accomplishment of each annular reinforcing structure, an end flap of the carcass ply is turned back around a first circumferentially-inextensible insert and axially interposed between the first insert itself and a second circumferentially-inextensible insert.

In more detail, the invention relates to a vehicle wheel tyre, characterized by the features recited by the characterizing portion of claim 1.

Preferably, the carcass structure further comprises at least one filling body of elastomer material in contact with at least one of said inextensible annular inserts.

In a possible embodiment, the second inextensible annular insert is conveniently interposed between the respective end flap and the filling body, and in contact with the end flap on the opposite side relative to the first inextensible annular insert.

Alternatively, the filling body can be advantageously interposed between the respective end flap of the carcass ply and the respective second annular insert.

In such case, the second annular insert is preferably directly in contact with at least one axially outer side surface of the respective filling body, located on the opposite side relative to the end flap of the carcass ply.

Preferably, the end flap of the carcass ply completely covers the respective first inextensible annular insert.

The second inextensible annular insert can conveniently project beyond one end region of the respective end flap, as well as possibly beyond an outer circumferential edge of the first inextensible annular insert.

Alternatively, the first inextensible annular insert can project beyond one end region of the respective end flap and/or beyond an outer circumferential edge of the respective second inextensible annular insert.

Preferably, the first inextensible annular insert comprises at least one first series of concentric coaxial coils and one second series of concentric coaxial coils disposed in axial side by side relationship with the coils of the first series.

The number of coils of the first series is preferably greater than the number of coils of the second series, and the first coil series is directly in contact with the carcass ply, whereas the second coil series is directly in contact with the respective end flap.

The filling body preferably has a circumferentially outer portion directly in contact with a side surface of the carcass ply.

It is also preferably provided that said at least one carcass ply should comprise: a plurality of strip-like sections each comprising at least two of said thread-like elements disposed longitudinally and parallelly of each other and at least partly covered with at least one layer of raw elastomer material, each of said strip-like sections extending in a substantially U-shaped configuration according to a cross section outline of the carcass structure, to define two side portions substantially extending in planes orthogonal to a geometric axis of the carcass structure itself at mutually spaced apart positions in an axial direction, and a crown portion extending at a radially outer position between the side portions; said crown portions being disposed in side by side relationship with each other along the circumferential extension of the carcass structure, whereas the side portions of each strip-like section are each partly covered with a side portion of at least qn adjoining strip-like section.

Advantageously, the side portions of said strip-like sections mutually converge towards the geometric axis of the carcass structure, the covering of the side portions of the strip-like sections progressively increasing in the direction of the inner circumferential edge of the carcass ply starting from a zero value close to transition regions between said side portions and said crown portions.

The present invention also relates to a method of manufacturing a vehicle wheel tyre, characterized by the features recited in the characterizing portion of claim 18.

Preferably, also provided is a step of applying at least one filling body of elastomer material in contact with at least one annular insert.

Preferably, at least one of said first and second inextensible annular inserts is formed by winding up a continuous elongated element in radially-superposed concentric coils.

In more detail, at least one of said first and second inextensible annular inserts can be conveniently formed directly against the carcass ply.

Alternatively, at least one of said first and second annular inserts can be formed in a forming die, said forming die being subsequently moved against the carcass ply for application of the inextensible annular insert.

Turning-back of the end flap preferably comprises the following steps: axially pushing the end flap for moving it from a first position in which it projects radially inwardly relative to the first inextensible annular insert to a second position in which it is axially oriented away from an equatorial plane of the carcass structure; exerting a rolling action on the end flap for laterally applying it against the first inextensible annular insert.

In a preferential embodiment, application of the filling body comprises the steps of: making said filling body in a forming die; axially moving the forming die against the carcass structure.

In addition, before the simultaneous application of the filling body and the second inextensible annular insert against the carcass structure, coupling of the filling body with the second inextensible annular insert in the forming die may be advantageous.

Alternatively, application of the filling body may be carried out by forming the filling body directly against the carcass structure.

In more detail, said formation of the filling body against the carcass structure preferably takes place by extrusion of at least one continuous strip-like element wound up in superposed coils.

In accordance with a preferred embodiment of the invention, manufacture of the carcass ply comprises the following steps: preparing strip-like sections each comprising longitudinal and parallel thread-like elements at least partly coated with one layer of raw elastomer material; depositing each of the strip-like sections onto a toroidal support in a substantially U-shaped conformation around the cross section outline of the toroidal support, to define two side portions substantially extending in planes orthogonal to a geometric axis of rotation of the toroidal support at mutually spaced apart positions in an axial direction, and a crown portion extending at a radially outer position between the side portions, in which the crown portions of each strip-like section are consecutively disposed in side by side relationship along the circumferential extension of the toroidal support, whereas the side portions of each strip-like section are each partly covered with a side portion of at least one circumferentially consecutive section.

Advantageously, the side portions belonging to circumferentially contiguous strip-like sections on the toroidal support are caused to mutually converge in the direction of the geometric rotation axis of the toroidal support itself, the covering of the side portions of each strip-like section progressively increasing in the direction of the inner circumferential edge of the carcass ply starting from a zero value close to transition regions between said side portions and said crown portions.

The strip-like sections are conveniently laid down by making the side portions of each strip-like section project from an inner circumferential edge of the toroidal support, the projecting ends of the side portions defining the end flaps of said carcass ply.

Further features and advantages will be best understood from the detailed description of a preferred but non-exclusive embodiment of a tyre for vehicle wheels according to the present invention. This description will be taken hereinafter with reference to the accompanying drawings, given by way of non-limiting example, in which:

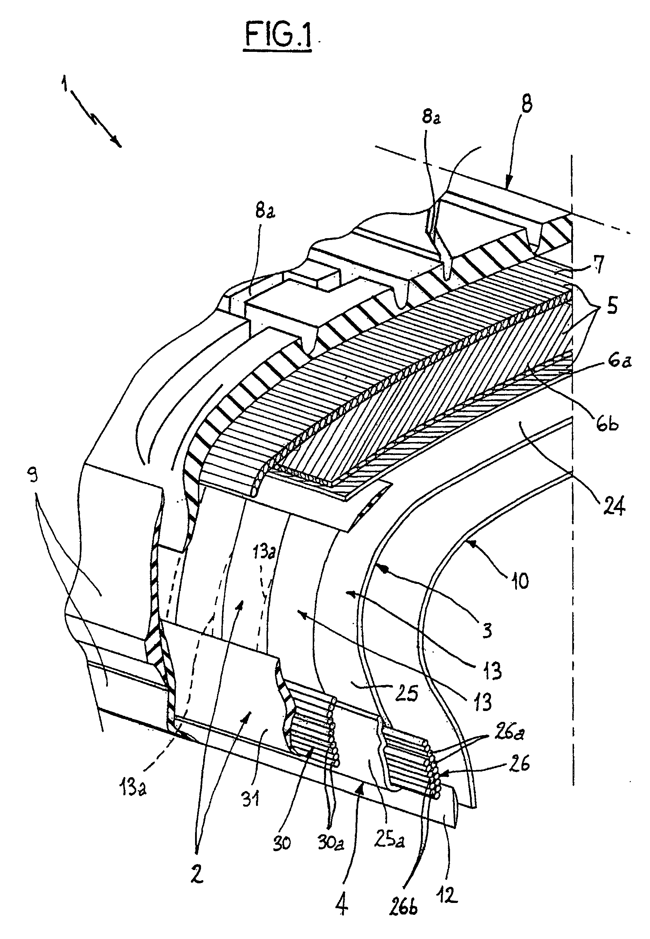

- Fig. 1 is a fragmentary split perspective view of a tyre in accordance with the present invention;
- Figs. 2 to 5 diagrammatically show an apparatus for making the carcass ply, according to different operating steps respectively, seen in a direction orthogonal to a diametrical section plane of a toroidal support carrying the tyre during the manufacturing step;
- Fig. 6 is a diagram showing manufacture of a continuous strip-like element intended for forming the carcass ply;
- Fig. 7 shows an embodiment of said strip-like element in cross section;
- Fig. 8 is a fragmentary perspective view diagrammatically showing the deposition sequence of strip-like sections for the purpose of forming the ply belonging to the carcass structure in accordance with the invention;
- Fig. 9 is a fragmentary diametrical section view of an operating step in which a first annular insert is formed for application to the carcass ply in order to make an annular reinforcing structure at the tyre bead;
- Fig. 10 is a fragmentary diametrical section view of an operating step in which an end flap of the carcass ply is about to be turned back around the first annular insert applied to the ply itself;
- Fig. 11 is a fragmentary diametrical section view of an operating step in which turning back of the end flap of the carcass ply is completed by a rolling action;
- Fig. 12 is a fragmentary diametrical section view showing application of a second circumferentially-inextensible annular insert together with a filling insert;
- Fig. 13 is a fragmentary diametrical section view of the carcass provided with the second inextensible annular insert and the filling insert referred to in Fig. 12;
- Fig. 14 is a fragmentary cross-section view showing a tyre obtained in accordance with the invention;
- Fig. 15 is a fragmentary cross-section view showing an alternative embodiment of the tyre seen in Fig. 14;
- Fig. 16 is a fragmentary cross-section view showing a further alternative embodiment of a tyre to be obtained in accordance with the invention.

With reference to the drawings, a tyre for vehicle wheels having a carcass structure 2 manufactured in accordance with the present invention has been generally identified by reference numeral 1.

The carcass structure 2 has at least one carcass ply 3 having a substantially toroidal conformation and in engagement, by its opposite circumferential edges, with a pair of annular reinforcing structures 4, each of which is located, when the tyre has been completed, at the region usually identified as "tyre bead".

Applied to the carcass structure 2 at a circumferentially outer position thereof, is a belt structure 5 comprising one or more belt strips 6a, 6b and 7. A tread band 8 is circumferentially superposed on the belt structure 5 and longitudinal and transverse cuts 8a are formed in said tread band 8, following a moulding operation carried out concurrently with the tyre vulcanization, and such disposed as to define a desired "tread pattern".

The tyre also comprises a pair of so-called "sidewalls" 9 laterally applied to opposite sides of the carcass structure 2.

The carcass structure 2 may possibly be coated, on its inner walls, with a liner 10, essentially consisting of a layer of air-proof elastomer material, suitable to ensure the hermetic seal of the inflated tyre.

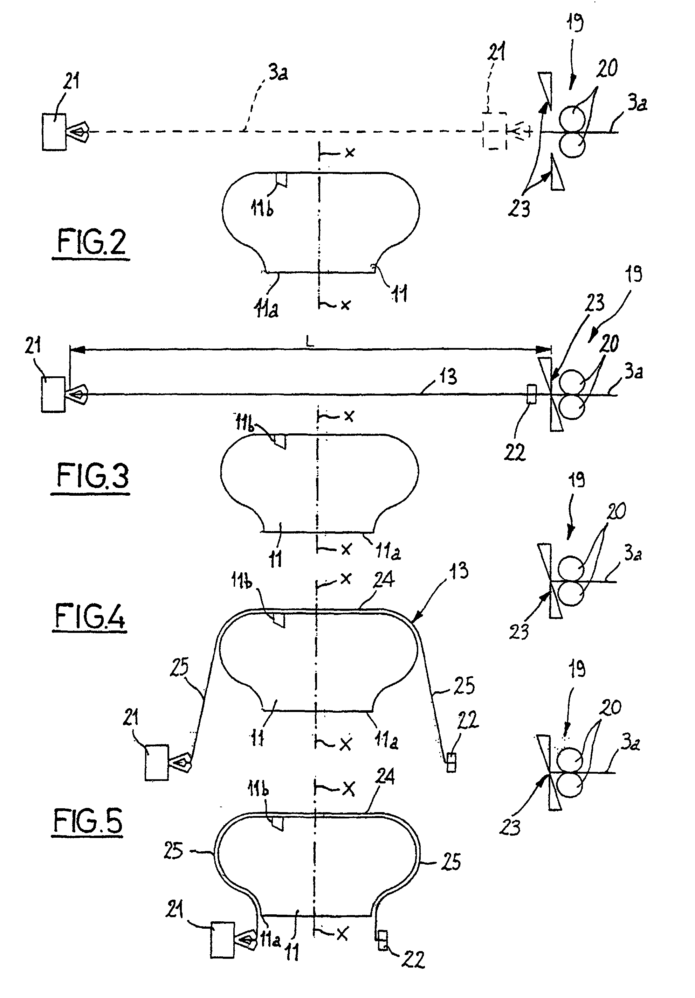

Assembling of the above listed components, as well as production of one or more of said components, takes place with the aid of a toroidal support 11, diagrammatically shown in Figs. 2 to 5, having the same shape as the inner walls of the tyre to be manufactured.

In a preferential solution the toroidal support 11 has reduced sizes relative to those of the finished tyre, according to a linear amount preferably included between 2% and 5%, measured, just as an indication, along the circumferential extension of the support itself at an equatorial plane X-X thereof which is coincident with the equatorial plane of carcass structure 2 and tyre 1 taken as a whole.

The toroidal support 11, which is not described or illustrated in detail in that it is not particularly of importance to the purposes of the invention, may for example consist of a collapsible drum or a suitably-reinforced inflatable bladder, so that it may take and maintain the desired toroidal conformation under inflation conditions.

After taking into account the above statements, manufacture of tyre 1 first involves formation of the carcass structure 2 which starts with the possible formation of liner 10.

Manufacture of liner 10 can take place in any manner convenient for a person skilled in the art, and therefore it is not described in detail.

It is to be noted that concurrently with manufacture or application of liner 10, application of a pair of auxiliary annular elements 12 can be carried out close to the inner circumferential edges of the carcass structure 4 being manufactured. These auxiliary annular elements 12 can be obtained for example from at least one auxiliary ribbon-like band obtained from a respective extruder located at the toroidal support 11.

In accordance with a preferential embodiment of the present invention, the carcass ply 3 is directly formed on the toroidal support 11 by depositing thereon, as better clarified in the following, a plurality of strip-like sections 13 obtained from at least one continuous strip-like element 3a preferably having a width included between 3 mm and 20 mm.

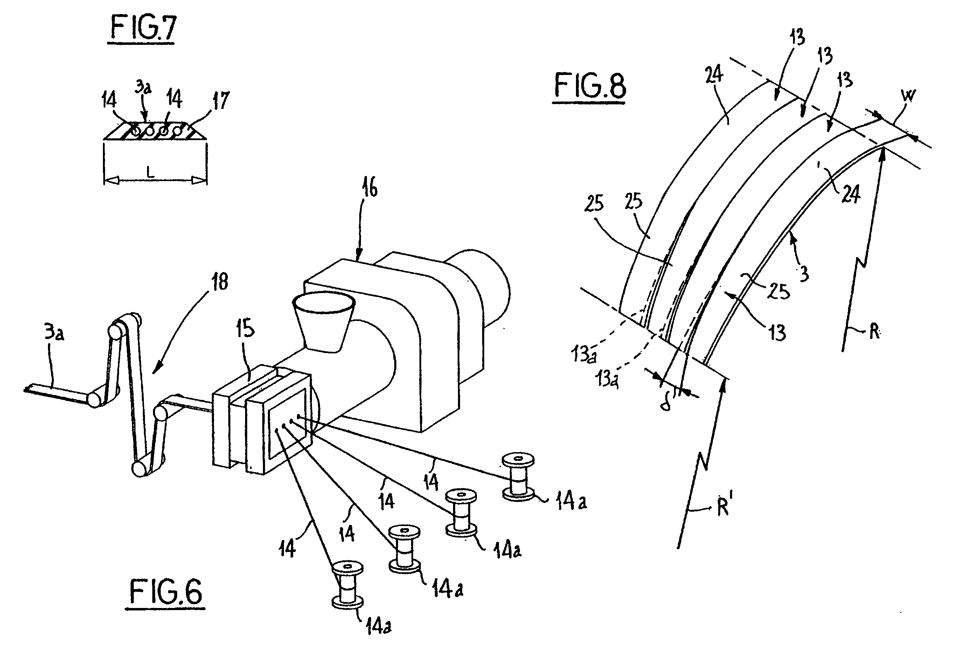

As shown in Fig. 6, preparation of the continuous strip-like element 3a essentially involves that two or more thread-like elements 14, and preferably three to ten thread-like elements 14, fed from respective reels 14a, should be guided through a first extruder 15 associated with a first extrusion apparatus 16 carrying out feeding of raw elastomer material through the extruder itself.

It is pointed out that, to the purposes of the present description by "extruder" it is intended that part of the extrusion apparatus, also identified in this particular field by the term "extrusion head", provided with a so-called "die" passed through by the product being worked at an outlet port shaped and sized according to the geometrical and dimensional features to be given to the product itself.

The elastomer material and thread-like elements 14 are intimately joined together within the extruder 15, thereby generating the continuous strip-like element 3a at the outlet thereof, which element is formed of at least one layer of elastomer material 17 in the thickness of which the thread-like elements themselves are partly incorporated.

The thread-like elements 14 may each consist for example of a textile cord preferably having a diameter included between 0.6 mm and 1.2 mm, or a metallic cord preferably having a diameter included between 0.3 mm and 2.1 mm.

In order to give the carcass ply 3 the desired compactness and homogeneity qualities, the thread-like elements 14 can be disposed with a thickness greater than six thread-like elements per centimetre, as circumferentially detected on the carcass ply 3 close to the equatorial plane X-X of the carcass structure 2. In any case, it is preferably provided that the thread-like elements 14 should be disposed in the strip-like element 3a according to a mutual distance between centres not lower than 1.5 times the diameter of the thread-like elements themselves, in order to enable appropriate rubberizing between the adjacent threads.

The continuous strip-like element 3a coming out of the extruder 15 can be advantageously guided, optionally through a first accumulator-compensator device 18, to a deposition apparatus 19 diagrammatically shown in Figs. 2 to 5.

The deposition apparatus 19 essentially comprises first guide members 20, consisting for example of a pair of opposite rollers intended for engagement of the continuous strip-like element 3a produced by the extruder 15, downstream of the accumulator-compensator device 18.

Downstream of the first guide members 20, the strip-like element 3a comes into engagement with a first grip member 21 movable in a direction oriented transversely of the equatorial plane X-X of the toroidal support 11.

In more detail, the first grip member 21 is movable between a first operating position in which, as shown in Fig. 2, it engages one end of the continuous strip-like element 3a close to the first guide members consisting of opposite rollers 20, and a second operating position in which, as shown in Fig. 3, it is moved apart from the first guide member in order to lay down the continuous strip-like element 3a transversely of the equatorial plane X-X of the toroidal support 11.

When the first grip member 21 has reached the second operating position, a second grip member 22 engages the continuous strip-like element 3a close to the first guide members 20.

Then, intervention of a cutting member 23 takes place and it cuts the continuous strip-like element 3a at a stretch thereof included between the second grip element 22 and the first guide members 20, giving rise to formation of a strip-like section 13 of a predetermined length "L".

Following the cutting action by the cutting member 23, the obtained strip-like section 13 is laid down transversely and at a centred position relative to the equatorial plane X-X of the toroidal support.

Afterwards, the grip members 21 and 22 are simultaneously translated in the direction of the geometric axis of the toroidal support 11 by radially moving the strip-like section 13 close to the toroidal support. Under this circumstance, formation of a crown portion 24 takes place at a centred position on the longitudinal extension of the strip-like section 13, which portion extends at a radially outer position on the toroidal support 11.

As can be clearly inferred from Fig. 4, as the radial movement of the grip members 21 and 22 goes on, the opposite ends of the strip-like section 13 are moved radially close to the geometric axis of rotation of the toroidal support 11, giving rise to formation of two side portions 25 substantially extending in planes orthogonal to the geometric axis of rotation of the toroidal support, at positions axially spaced apart from each other.

By a possible subsequent approaching movement of the grip members 21 and 22 towards the equatorial plane X-X of the toroidal support 11, the opposite ends of the strip-like section 13 are definitively applied to the toroidal support itself so that deposition of section 13 is completed, this section taking a substantially U-shaped configuration around the cross section outline of the toroidal support itself.

To the purposes of the present description, by cross-section outline it is intended the configuration exhibited by the half-section of the toroidal support 11 sectioned along a plane radial to a geometric rotation axis thereof, not shown in the drawings, which is coincident with the geometric rotation axis of the carcass structure 2 and the tyre being manufactured.

As shown in fig. 5, it is preferably provided that when deposition has been completed, each of the side portions 25 of each strip-like section 13 should radially project, by its opposite ends, from an inner circumferential edge 11a of the toroidal support 11, so as to define, in the obtained carcass ply 3, end flaps 25a radially projecting towards the geometric axis of the toroidal support, to the purposes better clarified in the following.

If required, the side portions 25 of the strip-like section 13 can be submitted to a pressing step against the side walls of the toroidal support 11. For the purpose, a pair of pressing rollers or equivalent means not shown may be provided for operation on the opposite sides of the toroidal support 11, which rollers are each arranged to act on the respective side portion 25 by a thrust action and simultaneous radial sliding towards the geometric axis of rotation of the toroidal support 11.

Due to the sticky character of the raw elastomer material forming layer 17 coating the thread-like elements 14, a steady adhesion of the strip-like section 13 to the surfaces of the toroidal support 11 is ensured, even in the absence of liner 10 on said toroidal support. In more detail, the above described adhesion takes place as soon as the strip-like section 13 comes into contact with the toroidal support 11 at a radially external region of its cross section outline.

In addition to, or in place of the above described exploitation of the natural sticky character of the elastomer material, holding of one or more strip-like sections 13 on the toroidal support 11 can be obtained by carrying out a suction action produced through one or more appropriate holes 11b arranged on the toroidal support.

The toroidal support 11 can be driven in angular rotation according to a step-by-step movement in synchronism with operation of the deposition apparatus 19, in such a manner that at each cutting action of each strip-like section 13 deposition of the latter onto the toroidal support takes place in a circumferential side by side relationship with the strip-like section 13 previously deposited.

It is to be pointed out to the purposes of the present description that, when not otherwise stated, the term "circumferential" refers to a circumference lying in the equatorial plane X-X and close to the outer surface of the toroidal support 11.

Due to the above described operating sequence of the deposition apparatus 19, in the first carcass ply 3 thus obtained the crown portions 24 of each strip-like section 13 are consecutively disposed in side by side relationship along the circumferential extension of the toroidal support 11, whereas each of the side portions 25 of each section 13 is partly superposed with the side portion 25 of at least one section 13 previously laid down, and also partly covered with the side portion 25 of at least one section 13 laid down subsequently. In the accompanying figures, the overlapping regions of the strip-like sections 13 forming the first carcass ply 3 are identified by 13a.

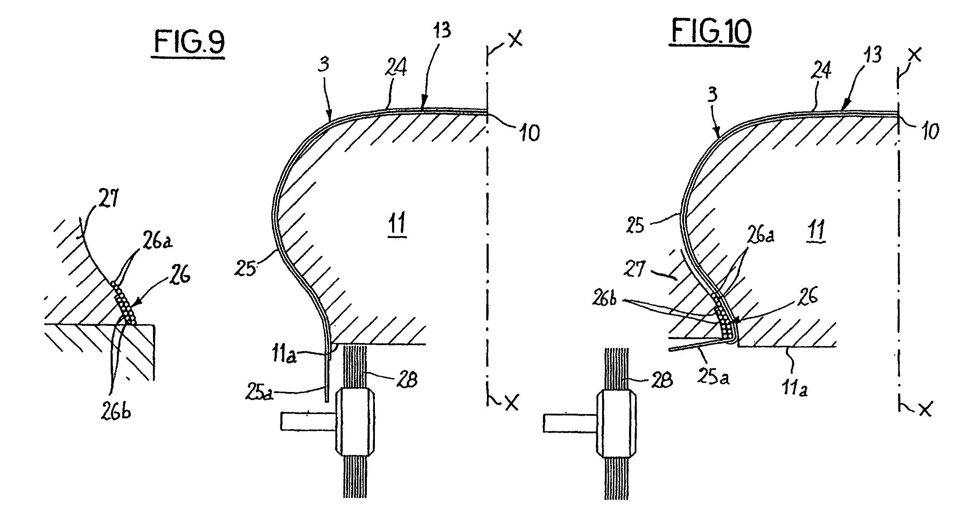

As clearly shown in Fig. 8, the side portions 25 in mutual superposition relationship converge towards each other substantially in the direction of the geometric axis of rotation of the toroidal support 11, at an angle δ the value of which is correlated with the width "W" of the strip-like sections 13, and in any case with the circumferential distribution pitch thereof, as well as with the value of a maximum radius R to be measured at a point of maximum distance from the geometric axis of rotation of the toroidal support 11.

Due to the mutual convergence between the contiguous side portions 25, the mutual superposition or covering of same, i.e. the circumferential width of the overlapping regions 13a, progressively increases in the direction of the respective inner circumferential edge of the carcass structure 2, starting from a zero value at the transition region between the side portions 15 and the crown portions 24.

It is to note that, due to the difference between a maximum radius R and a minimum radius R', to be measured at a point of minimum distance from the geometric axis of rotation of the toroidal support 11, the average thickness of the thread-like elements 14, i.e. the amount of the thread-like elements 14 present in a circumferential section of given length, progressively increases on moving close to said geometric rotation axis.

In fact, this increase in thickness is proportional to the ratio value between the maximum radius R and minimum radius R'.

It is also to note that the thread-like elements 14 belonging to two mutually superposed side portions 25 are disposed in respectively crossed orientations at an angle corresponding to said angle δ, in correlation with the width of the individual sections 13 and their circumferential distribution pitch, as well as with the value of the maximum radius R.

By suitably inclining the orientation of the geometric axis of rotation of the toroidal support 11 relative to the movement direction of the first grip member 21 a desired inclination can be given to the crown portions 24 of sections 13 which is included, by way of example, between 0° and 25° relative to a radial plane passing through the geometrical axis. In more detail, this inclination may be advantageously included between 0° and 15° and more preferably between 0° and 3°, if the carcass structure 2 comprises only one carcass ply 3 as in the example shown, or included between 10° and 20°, and more preferably correspond to 15°, if the carcass structure also comprises a second carcass ply.

Accomplishment of a carcass structure 2 generally comprises the step of applying said annular reinforcing structure 4 to an area close to each of the inner circumferential edges of the carcass ply 3 for the purpose of creating the carcass regions known as "beads", which are specifically intended for ensuring anchoring of the tyre to a corresponding mounting rim; in accordance with a preferred embodiment of the tyre, the carcass ply thereof is obtained in the above described manner.

In accordance with the present invention, accomplishment of each reinforcing structure 4 is carried out by applying at least one first circumferentially-inextensible annular insert 26, substantially in the form of a crown concentric with the geometric axis of rotation of the toroidal support 11, to an area close to each of the end flaps 25a of the carcass ply 3. The first annular insert 26 can be made up of one or more elongated metal elements wound up in several substantially-concentric coils 26a, 26b. Coils 26a, 26b may be defined by a continuous spiral or by concentric loops made up of respective elongated elements.

In more detail, in the preferential embodiment illustrated each first annular insert 26 comprises a first series of concentric coaxial coils 26a and a second series of concentric coaxial coils 26b disposed axially close to the coils 26a of the first series. The number of coils 26a of the first series, located directly in contact with the carcass ply 3, is preferably greater than the number of coils 26b of the second series, located on the opposite side with respect to the carcass ply itself.

Accomplishment of each first annular insert 26 can be advantageously carried out by winding up a continuous elongated element on a forming die 27 the shape of which matches that of the insert. For winding, forming die 27 can be driven in rotation around its own axis, while the elongated element is being suitably guided with the aid of rollers or in any other manner convenient for a person skilled in the art, so as to define coils 26a, 26b disposed according to the first and second series.

Forming die 27, conveniently arranged coaxially with the toroidal support 11 can be subsequently moved in an axial direction against the carcass ply 3 for application of the first annular insert 26, utilizing the toroidal support as a rigid contrast-element in order to exert an appropriate force for applying the insert against the carcass ply.

Alternatively, formation of the first annular insert 26 can be carried out directly against the carcass ply 3 arranged on the toroidal support 11, in the same manner as above described with reference to formation of said insert on forming die 27.

As shown in Figs. 9 and 10, the first annular insert 26 is such applied that its inner circumferential edge is substantially in coincidence with the inner circumferential edge 11a of the toroidal support 11. In other words, on its application the first annular insert 26 is disposed at a radially outer position relative to the corresponding end flap 25a of the carcass ply 3.

When application has been completed, the end flap 25a of the carcass ply 3 is turned back around the inner circumferential edge of the first annular insert 26.

This turning-back step can be for example carried out with the aid of at least one brush element 28 associated with the toroidal support 11 and movable between a first operating position in which, as shown in Fig. 9, it is located at a radially inner position relative to the toroidal support and a second operating position in which it is axially moved away from the equatorial median plane X-X of the toroidal support 11, as seen in Fig. 10.

Following the above displacement, the brush element 28 exerts an axial thrust on the end flap 25a so as to bring it from a first position in which, as it appears from the preceding description, it projects radially inwardly relative to the first annular insert 26, to a second position in which, as seen in Fig. 10, it is oriented axially away from the equatorial plane X-X.

During this operating step, forming die 27 can be maintained in thrust relationship on the first annular insert 26, to ensure steadiness of same during folding of the end flap 25a from the first to the second position.

Subsequently, after removal of forming die 27, a rolling action is carried out on the end flap 25a, to laterally apply it against the first annular insert 26.

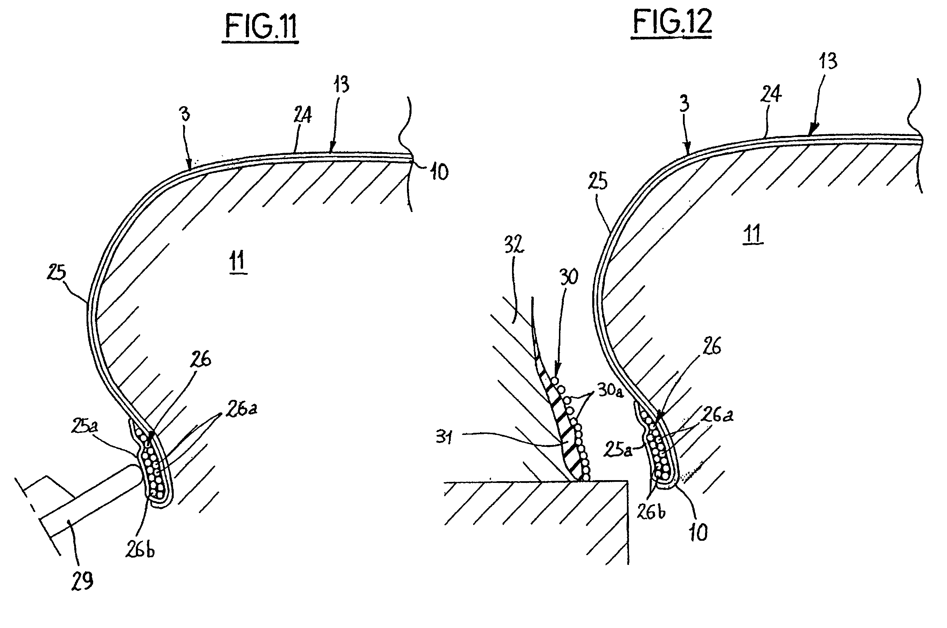

As viewed from Fig. 11, this rolling action can be obtained by at least one roller 29 acting on the end flap 25a in contrast relationship against the first annular insert 26. Roller 29 can be radially moved away from the geometric axis of the toroidal support 11 while said support is driven in rotation, in order to ensure a homogeneous application of the end flap 25a over the whole surface extension thereof.

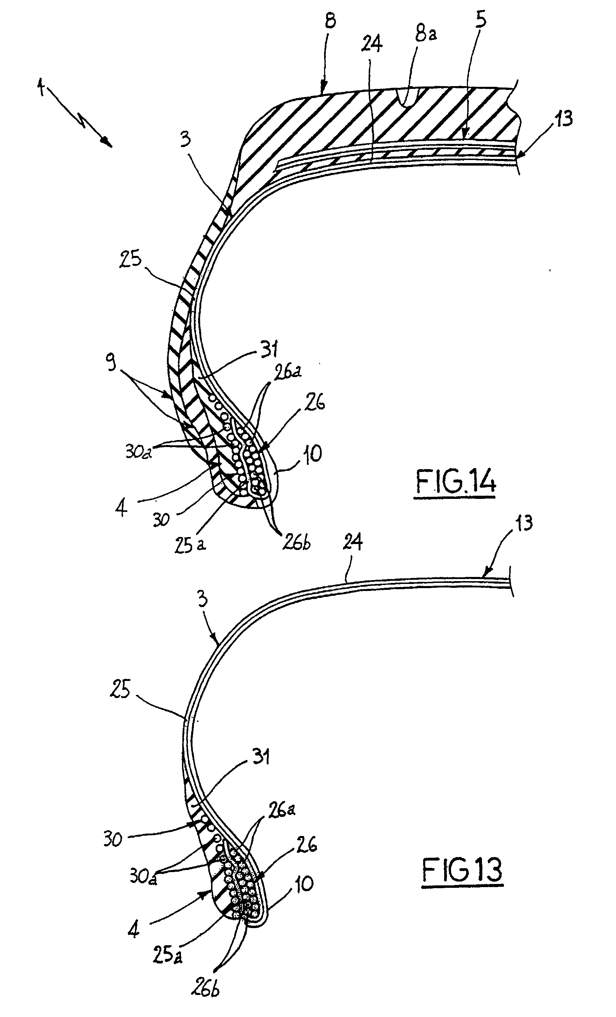

It may be conveniently provided that, when the turning-back step is over, the end portion of the end flap 25a should be located at a radially outer position relative to the outer circumferential edge of the first annular insert 26, in such a manner that said insert 26 is completely covered, as shown in the solutions in Figs. 13, 14 and 16.

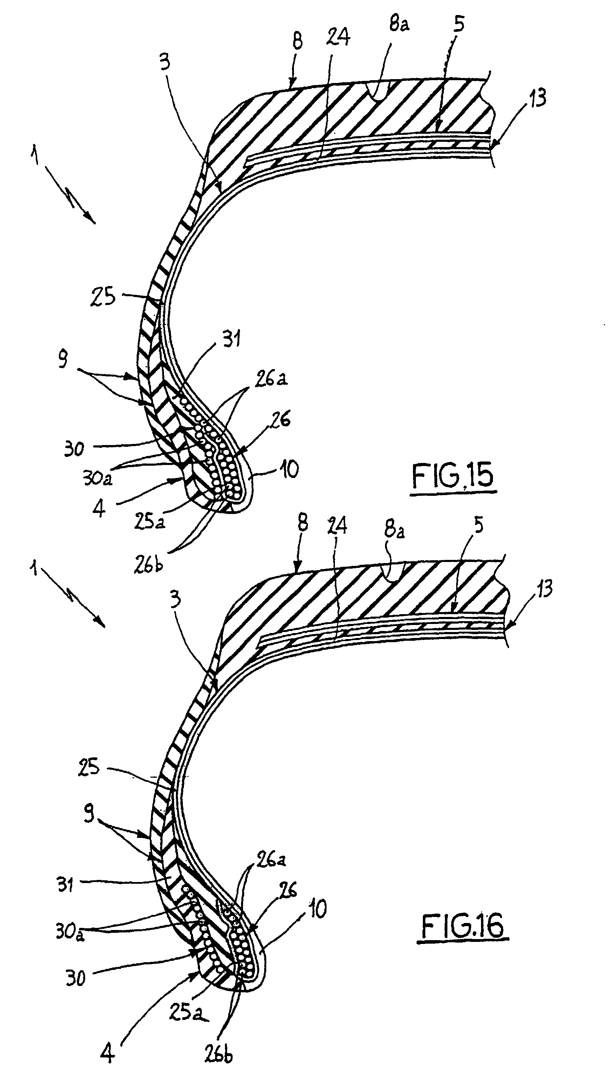

Alternatively, the first insert 26 may be provided to project beyond the end portion of the end flap 25a, as illustrated in the solution shown in Fig. 15.

For accomplishment of each annular reinforcing structure 4 it is also provided that at least one second circumferentially-inextensible annular insert 30 should be applied at an axially outer position relative to the first annular insert 26, as well as, preferably, one filling body 31 of elastomer material put into contact with one of the annular inserts.

Like the first insert 26, the second annular insert 30 is in the form of a crown disposed coaxially with tyre 1, and it is made up of at least one elongated element extending in concentric coils 30a. For manufacture of the second insert 30, any of the modalities described with reference to the first annular insert 26 may be conveniently selected.

As shown in Figs. 14 and 16, the radial extension of the second annular insert 30 can be conveniently selected in such a manner that it projects beyond the end portions of the respective end flap 25a. Still with reference to Figs. 14 and 16, the second annular insert 30 may be also provided to radially project relative to the outer circumferential edge of the first annular insert 26.

Alternatively, the second annular insert 30 can have a reduced radial extension, in such a manner that it is the first annular insert 26 that projects beyond the outer circumferential edge of the second insert. This solution is preferably adopted when the first annular insert 26 has such a radial extension that it projects beyond the end portion of the end flap 25a of the carcass ply 3, as shown in Fig. 15.

Application of the filling body 31 can be advantageously performed by first making the filling body itself in a second forming die 32, which can be subsequently moved close to the carcass structure 2 during its manufacturing step for causing application of the filling body itself.

In more detail, it may be also advantageously provided that the second forming die should define, together with a counter-mould not shown, a shaped cavity adapted to be filled with raw elastomer material introduced by injection so as to form the filling body 31.

Alternatively, the filling body 31 can be formed by winding up at least one strip-like element continuously extruded from an adjoining extruder, on a forminf die 32 which for the purpose can be driven in rotation, so as to form a plurality of superposed coils in an axial and/or radial direction, in order to define the filling body in the desired conformation.

Formation of the filling body 31 can also be executed directly against the carcass structure 2 during its manufacture, by winding up said extruded strip-like element for example, while the toroidal support 11 is rotated around its own axis.

Advantageously, the second annular insert 30 can be coupled with the filling body 31 in the second forminf die 32, so as to subsequently carry out the simultaneous application of the filling body and the second insert against the carcass structure 2.

In particular, in the embodiment shown in Figs. 12 to 14, the second annular insert 30 is made against the filling body 31 previously formed on the second forming die 32. The second forming die 32 is then moved axially close to the carcass structure 2 being manufactured, causing the simultaneous application of the second annular insert 30 and the filling body 31 on the carcass structure.

As shown in Fig. 13, when application has been completed, the second insert 30 is interposed between the filling body 31 and the end flap 25a, being in contact with said flap from the opposite side relative to the first annular insert 26. In other words, the end flap 25a is advantageously enclosed and steadily anchored between the first and second annular inserts 26, 30, thereby ensuring an excellent anchoring of the carcass ply 3 within the tyre bead.

It is to note that the same result can be achieved when the second insert 30 and/or the filling body 31 are manufactured directly against the carcass structure 2 being worked, in accordance with the previous description.

Alternatively, it may be provided that on the second forming die 32 the second annular insert 30 should be made first and subsequently the filling body 31, to carry out afterwards the simultaneous application of said second insert and filling body by axially moving the forming die 32 close to the carcass structure 2.

In this case, when application is over, the filling body 31 is interposed between the end flap 25a of the carcass ply 3 and the second annular insert 30, as shown in Fig. 16.

The second annular insert 30 is in turn directly in contact with an axially outer side surface of the filling body 31, on the opposite side relative to the end flap 25a of the carcass ply 3. In this case too, a similar result can be advantageously achieved by sequentially manufacturing the filling body 31 and/or the second annular insert 30 directly against the carcass structure 2.

It is to note that in each of the preferential embodiments illustrated, the filling body 31 has a circumferentially outer portion directly in contact with a side portion of the carcass ply 3.

However, this circumstance could be inexistent if the first annular insert 26, as well as possibly the second annular insert 30 in the solutions of Figs. 14 and 15, should have a radial extension greater than the radial extension of the filling body 31.

In tyres of the radial type, a belt structure 5 is usually applied to the carcass structure 2.

This belt structure 5 may be made in any manner convenient for a person skilled in the art and in the embodiment shown it essentially comprises a first and a second belt strips 6a, 6b having cords with a respectively crossed orientation. Superposed on the belt strips is an auxiliary belt strip 7, for instance obtained by winding up at least one continuous cord in coils axially disposed in side by side relationship on the first and second belt strips 5, 6.

Then the tread band 8 and sidewalls 9, which are also obtained in any manner convenient for a person skilled in the art, are applied to the belt structure 5.

Embodiments of a belt structure, sidewalls and a tread band that can be advantageously adopted for accomplishment of the tyre in reference on the toroidal support 11 are described in the European Patent Application No. 97830632.2 in the name of the same Applicant.

Tyre 1 thus manufactured lends itself to be now submitted, possibly after removal of same from support 11, to a vulcanization step that can be carried out in any known and conventional manner.

During the vulcanization step the carcass ply 3, and belt strips 6a, 6b, 7 can be submitted to a stretching step to achieve a pre-tensioning thereof, giving rise to an expansion of same of a linear amount, measured on the circumferential extension at the equatorial plane X-X of the tyre itself, included by way of example between 2% and 5%.

The present invention achieves important advantages.

In fact, the expedients proposed in the present invention ensure a satisfactory structural strength at the tyre beads.

In particular, interposition of the turned-back end flap 25a between the annular inserts 26, 30 ensures an excellent anchoring of the carcass ply in each tyre bead.

Also advantageous for achieving a structural strength close to the tyre beads is the mutual superposition between the side portions 25 of the strip-like sections 13 which has its maximum value exactly at the radially innermost regions of the carcass structure that are most affected by the effects of stresses under use conditions.

It is also to note that, due to the mutual convergence between the side portions of contiguous strip-like sections, the thread-like elements 14 of the individual sections at the regions 13a of mutual superposition are mutually crossed at an angle corresponding to the above mentioned angle "δ", which represents a further advantage in terms of overall structural strength.

In addition to the above, the presence of the circumferentially-inextensible annular inserts 27, 28 intimately joined to the carcass ply 3, creates a further "bond" between the mutually-crossed thread-like elements 14 belonging to the different strip-like sections. It is in fact to note that orientation of the elongated element or elements defining coils 26a, 26b, 30a of the first and/or second annular inserts extend substantially perpendicularly to the thread-like elements 14 belonging to the individual sections 13.

When vulcanization has been completed, these components, i.e. the thread-like elements 14 of the carcass ply 3 and the elongated elements of the inextensible insert or inserts 26, 30, form a very strong structure in the respective tyre bead, which structure is adapted to efficiently resist also stresses caused by slip thrusts transmitted when the tyre is run on a bend, which thrusts are particularly high in the case of a deflated tyre.

In this way the tyre having a carcass structure made in accordance with the present invention can bear the so-called "J-curve Test" with better results than those currently considered as acceptable in the known art.

It is also to note that the annular inserts 26 and 30, in the form of a crown, offer a further structural protection of the tyre at the beads.

All the above described advantageous aspects are achieved without necessarily involving stiffening of the carcass structure at the sidewall and tread band regions of the tyre.

This circumstance appears to be particularly advantageous for making tyres in which qualities of ride comfort and low rolling resistance are to be placed before the others.

It is also to note that accomplishment of the annular reinforcing structures in accordance with the invention is perfectly consistent with the solution of making the carcass structure directly during the tyre manufacture.

In this connection it is to point out that formation of the carcass ply or plies by deposition of strip-like sections each formed of several cords incorporated into a layer of elastomer material enables important advantages to be achieved. For example, as compared with the method described in the above mentioned patent US 5,362,343, time for making each carcass ply can be greatly reduced, due to the simultaneous deposition of as many thread-like elements as they are contained in each strip-like section 13 or in the continuous strip-like element 3a from which sections 13 are made. In addition, use of the strip-like elements 13 enables to be dispensed with the operation of previously laying down liner 10 on the toroidal support 11, since the elastomeric layer 17 is capable of adhering in an autonomous manner to the toroidal support 11 for a steady positioning of the individual sections 13.

Precision in positioning the strip-like sections 13 is further improved by the fact that each strip-like section has a great structural consistence, which makes it unaffected by vibrations or similar oscillation effects that can be transmitted from the deposition apparatus 19. In this connection it is to note that deposition of individual cords as described in US Patent No. 5,362,343 can create some problems exactly due to the vibrations and/or oscillations undergone by the cords during the deposition step.

In addition, the simultaneous deposition of a plurality of thread-like elements in accordance with the invention enables the deposition apparatus 19 to be operated at slower rates than required when the deposition of individual cords is concerned, which is a further advantage in terms of working precision without impairing productivity.

## Claims

1. A tyre for vehicle wheels comprising:
- a carcass structure (2);
- a belt structure (5) applied to the carcass structure (2), at a circumferentially outer position thereof;
- a tread band (8) circumferentially superposed on the belt structure (5); and
- sidewalls (9) laterally applied to opposite sides of the carcass structure (2);
wherein said carcass structure comprises;
- at least one carcass ply (3) comprising thread-like elements (14) substantially disposed transversely of a circumferential extension of the carcass structure (2);
- at least one pair of annular reinforcing structures (4) disposed close to respective inner circumferential edges of the carcass ply (3), each of said annular reinforcing structures (4) comprising:
- at least one first circumferentially-inextensible annular insert (26) substantially in the form of a crown disposed substantially coaxially of the carcass structure (2), close to an inner circumferential edge of the carcass ply (3), said first annular insert (26) being formed of at least one elongated element extending in concentric coils (26a, 26b);
- at least one second circumferentially-inextensible annular insert (30) substantially in the form of a crown disposed coaxially of the tyre, said second annular insert (30) being formed of at least one elongated element extending in concentric coils (30a);
wherein said carcass ply (3) has end flaps (25a) each turned back around an inner circumferential edge of the respective first annular insert (26) and each axially interposed between the respective first and second annular inserts (26, 30);
**characterized in that** each of said first and second circumferentially-inextensible annular insert (26, 30) exhibits a radially elongated transverse section outline.

2. A tyre as claimed in claim 1, wherein said carcass ply (3) and each first circumferentially-inextensible annular insert (26) abuts one against the other according to the whole surface extension of the first circumferentially-inextensible annular insert (26).

3. A tyre as claimed in claim 1, wherein said carcass ply (3) and each first circumferentially-inextensible annular insert (26) abuts one against the other according to the whole radial extension of the respective end flap (25a).

4. A tyre as claimed in claim 1, further comprising at least one filling body (31) of elastomer material in contact with at least one of said inextensible annular inserts (26, 30).

5. A tyre as claimed in claim 4, wherein the second inextensible annular insert (30) is interposed between the respective end flap (25a) and the filling body (31), said second inextensible annular insert (30) being in contact with the end flap (25a) on the opposite side relative to the first inextensible annular insert (26).

6. A tyre as claimed in claim 1, wherein the end flap (25a) of the carcass ply (3) completely covers the respective first inextensible annular insert (26).

7. A tyre as claimed in claim 1, wherein the second inextensible annular insert (30) projects beyond one end region of the respective end flap (25a).

8. A tyre as claimed in claim 1, wherein each second inextensible annular insert (30) projects beyond an outer circumferential edge of the first inextensible annular insert (26).

9. A tyre as claimed in claim 1, wherein the first inextensible annular insert (26) comprises at least one first series of concentric coaxial coils (26a) and one second series of concentric coaxial coils (26b) disposed in axial side by side relationship with the coils (26a) of the first series.

10. A type as claimed in claim 9, wherein the number of coils (26a) of the first series is greater than the number of coils (26b) of the second series.

11. A type as claimed in claim 10, wherein said first coil series (26a) is directly in contact with the carcass ply (3), whereas the second coil series (26b) is directly in contact with the respective end flap.

12. A tyre as claimed in claim 1, wherein the first inextensible annular insert (26) projects beyond one end region of the respective end flap (25a).

13. A tyre as claimed in claim 1, wherein the first inextensible annular insert (26) projects beyond an outer circumferential edge of the respective second inextensible annular insert (30).

14. A tyre as claimed in claim 4, wherein the filling body (31) is interposed between the respective end flap (25a) of the carcass ply (3) and the respective second annular insert (30).

15. A tyre as claimed in claim 14, wherein the second annular insert (30) is directly in contact with at least one axially outer side surface of the respective filling body (31), located on the opposite side relative to the end flap (25a) of the carcass ply (3).

16. A tyre as claimed in claim 1, wherein the filling body (31) has a circumferentially outer portion directly in contact with a side surface of the carcass ply (3).

17. A tyre as claimed in claim 1, wherein said at least one carcass ply (3) comprises:
- a plurality of strip-like sections (13) each comprising at least two of said thread-like elements (14) disposed longitudinally and parallelly of each other and at least partly covered with at least one layer of raw elastomer material (17),
- each of said strip-like sections (13) extending in a substantially U-shaped configuration according to a cross section outline of the carcass structure (2), to define two side portions (25) substantially extending in planes orthogonal to a geometric axis of the carcass structure itself at mutually spaced apart positions in an axial direction, and a crown portion (24) extending at a radially outer position between the side portions (25);
- said crown portions (24) being disposed in side by side relationship with each other along the circumferential extension of the carcass structure (2), whereas the side portions (25) of each strip-like section (13) are each partly covered with a side portion (25) of at least one adjoining strip-like section (13).

18. A tyre as claimed in claim 17, wherein the side portions (25) of said strip-like sections (13) mutually converge towards the geometric axis of the carcass structure (2), the covering of the side portions (25) of the strip-like sections (13) progressively increasing in the direction of the inner circumferential edge of the carcass ply (3) starting from a zero value close to transition regions between said side portions (25) and said crown portions (24).

19. A method of manufacturing a tyre for vehicle wheels, comprising the steps of:
- forming a carcass structure (2);
- applying a belt structure (5) to the carcass structure (2), at a circumferentially outer position thereof;
- applying a tread band (8) circumferentially superposed on the belt structure (5); and
- applying sidewalls (9) laterally to opposite sides of the carcass structure (2);
wherein forming of said carcass structure comprises
- making a carcass ply (3) having a pair of end flaps (25a) disposed circumferentially internally;
- applying at least one annular reinforcing structure (4) close to each end flap (25a) of the carcass ply (3);
wherein each annular reinforcing structure (4) is formed by the following steps:
- applying at least one first inextensible annular insert (26) close to the respective end flap (25a) of the carcass ply (3), said first inextensible annular insert (26) being formed of at least one first elongated element disposed in concentric coils (26a, 26b);
- turning back the end flap (25a) of the carcass ply (3) around an inner circumferential edge of the first annular insert (26);
- applying at least one second inextensible annular insert (30) close to the first annular insert (26), said second inextensible annular insert (30) being formed of at least one second elongated element disposed in concentric coils (30a);
**characterized in that** each of said first and second circumferentially-inextensible annular insert (26, 30) is formed according to a radially elongated transverse section outline.

20. A method as claimed in claim 19, wherein by the turning back step said carcass ply (3) and first circumferentially-inextensible annular insert (26) are applied one against the other according to the whole surface extension of the first circumferentially-inextensible annular insert (26) itself.

21. A method as claimed in claim 19, wherein by the turning back step said carcass ply (3) and first circumferentially-inextensible annular insert (26) are applied one against the other according to the whole radial extension of the respective end flap (25a).

22. A method as claimed in claim 19, further comprising the step of applying at least one filling body (31) of elastomer material in contact with at least one of said annular inserts (26, 30).

23. A method as claimed in claim 19, wherein at least one of said first and second inextensible annular inserts (26, 30) is formed by winding up a continuous elongated element in radially-superposed concentric coils (26a, 26b, 30a).

24. A method as claimed in claim 19, wherein at least one of said first and second inextensible annular inserts (26, 30) is formed directly against the carcass ply (3).

25. A method as claimed in claim 19, wherein at least one of said first and second annular inserts (26, 30) is formed in a forming die (27), said forming die (27) being subsequently moved against the carcass ply (3) for application of the inextensible annular insert (26, 30).

26. A method as claimed in claim 19, wherein said turning-back of the end flap (25a) comprises the following steps:
- axially pushing the end flap (25a) for moving it from a first position in which it projects radially inwardly relative to the first inextensible annular insert (26) to a second position in which it is axially oriented away from an equatorial plane of the carcass structure;
- exerting a rolling action on the end flap (25a) for laterally applying it against the first inextensible annular insert (26).

27. A method as claimed in claim 22, wherein application of the filling body (31) comprises the steps of:
- making said filling body (31) in a forming die (32);
- axially moving the forming die (32) against the carcass structure (2).

28. A method as claimed in claim 27, further comprising a step of coupling the filling body (31) with the second inextensible annular insert (30) in the forming die (32), before the simultaneous application of the filling body (31) and the second inextensible annular insert (30) against the carcass structure (2).

29. A method as claimed in claim 19, wherein application of the filling body (31) is carried out by forming the filling body (31) directly against the carcass structure (2).

30. A method as claimed in claim 29, wherein said formation of the filling body (31) against the carcass structure (2) takes place by extrusion of at least one continuous strip-like element wound up in superposed coils.

31. A method as claimed in claim 19, wherein manufacturing of the carcass ply (3) comprises the following steps:
- preparing strip-like sections (13) each comprising longitudinal and parallel thread-like elements (14) at least partly coated with one layer of raw elastomer material (17);
- depositing each of the strip-like sections (13) onto a toroidal support (11) in a substantially U-shaped conformation around the cross section outline of the toroidal support, to define two side portions (25) substantially extending in planes orthogonal to a geometric axis of rotation of the toroidal support (11) at mutually spaced apart positions in an axial direction, and a crown portion (24) extending at a radially outer position between the side portions (25);
- in which the crown portions (24) of each strip-like section (13) are consecutively disposed in side by side relationship along the circumferential extension of the toroidal support (11), whereas the side portions (25) of each strip-like section (13) are each partly covered with a side portion (25) of at least one circumferentially consecutive section.

32. A method as claimed in claim 31, wherein the side portions (25) belonging to circumferentially contiguous strip-like sections (13) on the toroidal support (11) are caused to mutually converge in the direction of the geometric rotation axis of the toroidal support itself, the covering of the side portions (25) of each strip-like section (13) progressively increasing in the direction of the inner circumferential edge of the carcass ply (3) starting from a zero value close to transition regions between said side portions (25) and said crown portions (24).

33. A method as claimed in claim 31, wherein the strip-like sections (13) are laid down by making the side portions (25) of each strip-like section (13) project from an inner circumferential edge (11a) of the toroidal support (11), the projecting ends of the side portions defining the end flaps (25a) of said carcass ply (3).

## Patentansprüche

1. Reifen für Fahrzeugräder
- mit einem Karkassenaufbau (2),
- mit einem Gurtaufbau (5), der auf den Karkassenaufbau (2) an einer am Umfang äußeren Position aufgebracht ist,
- mit einem Laufffächenband (8), das am Umfang auf dem Gurtaufbau (5) liegend angeordnet ist,
- mit Seitenwänden (9), die seitlich an gegenüberliegenden Seiten des Karkassenaufbaus (2) angebracht sind,
- wobei der Karkassenaufbau wenigstens eine Karkassenlage (3) mit fadenförmigen Elementen (14), die im Wesentlichen quer zu einer Umfangserstreckung des Karkassenaufbaus (2) angeordnet sind, und
- wenigstens ein Paar von ringförmigen Verstärkungsaufbauten (4) aufweist, die nahe an den jeweiligen inneren Umfangsrändern der Karkassenlage (3) angeordnet sind, wobei jeder der ringförmigen Verstärkungsaufbauten (4)
-- wenigstens eine erste am Umfang nicht dehnbare ringförmige Einlage (26), die im Wesentlichen in der Form eines Kranzes im Wesentlichen koaxial zum Karkassenaufbau (2) nahe an einem inneren Umfangsrand der Karkassenlage (3) angeordnet ist und von wenigstens einem langgestreckten Element gebildet wird, das sich in konzentrischen Windungen (26a, 26b) erstreckt, und
-- wenigstens eine zweite am Umfang nicht dehnbare ringförmige Einlage (30) aufweist, die im Wesentlichen in Form eines Kranzes koaxial zum Reifen angeordnet ist und von wenigstens einem langgestreckten Element gebildet wird, das sich in konzentrischen Windungen (30a) erstreckt,
- wobei die Karkassenläge (3) Endlaschen (25a) hat, von denen jade um einen inneren Umfangsrand der jeweiligen ersten ringförmigen Einlage (26) zurückgefaltet und von denen jede axial zwischen der jeweiligen ersten und zweiten ringförmigen Einlage (26, 30) angeordnet ist,
**dadurch gekennzeichnet,**
- **dass** von der ersten und zweiten am Umfang nicht dehnbaren ringförmigen Einlage (26, 30) jede einen radial langgestreckten Querschnittsumriss hat.

2. Reifen nach Anspruch 1, bei welchem die Karkassenlage (3) und jede erste am Umfang nicht dehnbare ringförmige Einlage (26) auf der ganzen Oberflächenerstreckung der ersten am Umfang nicht dehnbaren ringförmigen Einlage (26) aneinander liegen.

3. Reifen nach Anspruch 1, bei welchem die Karkassenlage (3) und jede erste am Umfang nicht dehnbare ringförmige Einlage (26) auf der ganzen radialen Erstreckung der entsprechenden Endlasche (25a) aneinander liegen.

4. Reifen nach Anspruch 1, welcher weiterhin wenigstens einen Füllkörper (31) aus elastomerem Material in Kontakt mit wenigstens einer der nicht dehnbaren ringförmigen Einlagen (26, 30) aufweist.

5. Reifen nach Anspruch 4, bei welchem die zweite nicht dehnbare ringförmige Einlage (30) zwischen der entsprechenden Endlasche (25a) und dem Füllkörper (31) angeordnet ist, wobei die zweite nicht dehnbare ringförmige Einlage (30) in Kontakt mit der Endlasche (25a) auf der bezüglich der ersten nicht dehnbaren ringförmigen Einlage (26) gegenüberliegenden Seite steht.

6. Reifen nach Anspruch 1, bei welchem die Endlasche (25) der Karkassenlage (3) die entsprechende erste nicht dehnbare ringförmige Einlage (26) vollständig abdeckt.

7. Reifen nach Anspruch 1, bei welchem die zweite nicht dehnbare ringförmige Einlage (30) über einen Endbereich der jeweiligen Endlasche (25a) vorsteht.

8. Reifen nach Anspruch 1, bei welchem jede zweite nicht dehnbare ringförmige Einlage (30) über einen äußeren Umfangsrand der ersten nicht dehnbaren ringförmigen Einlage (26) vorsteht.

9. Reifen nach Anspruch 1, bei welchem die erste nicht dehnbare ringförmige Einlage (26) wenigstens eine erste Reihe von konzentrischen koaxialen Windungen (26a) und eine zweite Reihe von konzentrischen koaxialen Windungen (26b) aufweist, die in einer axialen Beziehung Seite an Seite zu den Windungen (26a) der ersten Reihe angeordnet sind.

10. Reifen nach Anspruch 9, bei welchem die Anzahl der Windungen (26a) der ersten Reihe größer ist als die Anzahl der Windungen (26b) der zweiten Reihe.

11. Reifen nach Anspruch 10, bei welchem die erste Windungsreihe (26a) direkt in Kontakt mit der Karkassenlage (3) steht, während die zweite Windungsreihe (26b) direkt in Kontakt mit der jeweiligen Endlasche steht.

12. Reifen nach Anspruche 1, bei welchem die erste nicht dehnbare ringförmige Einlage (26) über einen Endbereich der jeweiligen Endlasche (25a) vorsteht.

13. Reifen nach Anspruch 1, bei welchem die erste nicht dehnbare ringförmige Einlage (26) über einen äußeren Umfangsrand der jeweiligen zweiten nicht dehnbaren ringförmigen Einlage (30) vorsteht.

14. Reifen nach Anspruch 4, bei welchem der Füllkörper (31) zwischen der jeweiligen Endlasche (25a) der Karkassenlage (3) und der jeweiligen zweiten ringförmigen Einlage (30) angeordnet ist.

15. Reifen nach Anspruch 14, bei welchem die zweite ringförmige Einlage (30) direkt in Kontakt mit wenigstens einer axial äußeren Seitenfläche des jeweiligen Füllkörpers (31) steht, die bezüglich der Endlasche (25a) der Karkassenlage (3) auf der gegenüberliegenden Seite angeordnet ist.

16. Reifen nach Anspruch 1, bei welchem der Füllkörper (31) einen am Umfang äußeren Abschnitt hat, der direkt in Kontakt mit einer Seitenfläche der Karkassenlage (3) steht.

17. Reifen nach Anspruch 1, bei welchem die wenigstens eine Karkassenlage (3)
- eine Vielzahl von streifenförmigen Abschnitten (13) aufweist, von denen jeder wenigstens zwei der fadenförmigen Elemente (14) hat, die in Längsrichtung und parallel zueinander angeordnet und wenigstens teilweise mit wenigstens einer Schicht eines Rohelastomermaterials (17) bedeckt sind,
- wobei sich jeder der streifenförmigen Abschnitte (13) in einer im Wesentlichen U-Form in einem Querschnittsumriss des Karkassenaufbaus (2) erstreckt und zwei Seitenteile (25), die sich im Wesentlichen in zur geometrischen Achse des Karkassenaufbaus senkrechten Ebenen an in Axialrichtung zueinander beabstandeten Stellen erstrecken, und einen Kronenteil (24) bildet, der sich an einer radial äußeren Position zwischen den Seitenteilen (25) erstreckt, und
- wobei die Kronenteile (24) in einer Beziehung Seite an Seite zueinander längs der Umfangserstreckung des Karkassenaufbaus (2) angeordnet sind, während die Seitenteife (25) eines jeden streifenförmigen Abschnitts (13) jeweils teilweise durch einen Seitenteil (25) von wenigstens einem angrenzenden streifenförmigen Abschnitt (13) abgedeckt sind.

18. Reifen nach Anspruch 17, bei welchem die Seitenteile (25) der streifenförmigen Abschnitte (13) gegenseitig zu der geometrischen Achse des Karkassenaufbaus (2) konvergieren, die Abdeckung der Seitenteile (25) der streifenförmigen Abschnitte (13) in der Richtung des inneren Umfangsrands der Karkassenlage (3) beginnend von einem Nullwert nahe den Übergangsbereichen zwischen den Seitenteilen (25) und den Kronenteilen (24) aus fortschreitend zunimmt.

19. Verfahren zur Herstellung eines Reifens für Fahrzeugräder mit den Schritten
- Ausbilden eines Karkassenaufbaus (2),
- Auflegen eines Gurtaufbaus (5) auf den Karkassenaufbau (2) an einer am Umfang äußeren Position,
- Aufbringen eines Laufflächenbandes (8) am Umfang auf dem Gurtaufbau aufliegend, und
- Anlegen von Seitenwänden (9) seitlich an gegenüberliegende Seiten des Karkassenaufbaus (2),
- wobei die Ausbildung des Karkassenaufbaus darin besteht,
-- dass eine Karkassenlage (3) hergestellt wird, die ein Paar von Endlaschen (25a) hat, die am Umfang innen angeordnet sind, und
-- dass wenigstens ein ringförmiger Verstärkungsaufbau (4) nahe an jeder Endlasche (25a) der Karkassenlage (3) angebracht wird,
- wobei jeder ringförmige Verstärkungsaufbau (4) durch die folgenden Schritte ausgebildet wird:
-- Anbringen wenigstens einer ersten nicht dehnbaren ringförmigen Einlage (26) nahe an der jeweiligen Endlasche (25a) der Karkassenlage (3), wobei die erste nicht dehnbare ringförmige Einlage (26) von wenigstens einem ersten langgestreckten Element gebildet wird, das in konzentrischen Windungen (26a, 26b) angeordnet wird,
-- Zurückfalten der Endlasche (25a) der Karkassenlage (3) um einen inneren Umfangsrand der ersten ringförmigen Einlage (26) herum, und
- Anbringen wenigstens einer zweiten nicht dehnbaren ringförmigen Einlage (30) in der Nähe der ersten ringförmigen Einlage (26), wobei die zweite nicht dehnbare ringförmige Einlage (30) von wenigstens einem zweiten langgestreckten Element gebildet wird, das in konzentrischen Windungen (30a) angeordnet wird,
**dadurch gekennzeichnet,**
- **dass** von der ersten und zweiten am Umfang nicht dehnbaren ringförmigen Einlage (26, 30) jede entsprechend einem radial langgestreckten Querschnittsumriss ausgebildet wird.

20. Verfahren nach Anspruch 19, bei welchem durch den Schritt des Zurückfaltens die Karkassenlage (3) und die erste am Umfang nicht dehnbare ringförmige Einlage (26) längs der gesamten Oberflächenerstreckung der ersten am Umfang nicht dehnbaren ringförmigen Einalge (26) aneinandergelegt werden.

21. Verfahren nach Anspruch 19, bei welchem durch den Zurückfaltschritt die Karkassenlage (3) und die erste am Umfang hicht dehnbare ringförmige Einlage (26) auf der ganzen radialen Erstreckung der jeweiligen Endlasche (25a) aneinandergelegt werden.

22. Verfahren nach Anspruch 19, welches weiterhin den Schritt aufweist, wenigstens einen Füllkörper (31) aus elastomerem Material in Kontakt mit wenigstens einer der ringförmigen Einlagen (26, 30) anzubringen.

23. Verfahren nach Anspruch 19, bei welchem von der ersten und zweiten nicht dehnbaren ringförmigen Einfage (26, 30) wenigstens eine dadurch gebildet wird, dass ein fortiaufendes langgestrecktes Element zu radial übereinandergelegten konzentrischen Windungen (26a, 26b, 30a) gelegt wird.

24. Verfahren nach Anspruch 19, bei welchem von der ersten und zweiten nicht dehnbaren ringförmigen Einlage (26, 30) wenigstens eine direkt an der Karkassenlage (3) ausgebildet wird.

25. Verfahren nach Anspruch 19, bei welchem von der ersten und zweiten ringförmigen Einalge (26, 30) wenigstens eine in einer Form (27) ausgebildet wird, die danach gegen die Karkassenlage (3) zum Aufbringen der nicht dehnbaren ringförmigen Einlage (26, 30) bewegt wird.

26. Verfahren nach Anspruch 19, bei welchem das Zurückfalten der Endlasche (25a) die folgenden Schritte aufweist:
- axiales Drücken auf die Endlasche (25a), um sie von einer ersten Position, in der sie radial nach innen bezüglich der ersten nicht dehnbaren ringförmigen Einlage (26) vorsteht, in eine zweite Position zu bewegen, in der sie axial von einer Äquatorialebene des Karkassenaufbaus weg gerichtet ist, und
- Ausüben einer Rollwirkung auf die Endlasche (25a), um sie seitlich an der ersten nicht dehnbaren ringförmigen Einlage (26) anzubringen.

27. Verfahren riach Anspruch 22, bei welchem das Anbringen des Füllkörpers (31) die Schritte aufweist:
- Ausbilden des Füllkörpers (31) in einer Form (32) und
- axiales Bewegen der Form (32) gegen den Karkassenaufbau (2).

28. Verfahren nach Anspruch 27, welches weiterhin einen Schritt aufweist, den Fütlkörper (31) mit der zweiten nicht dehnbaren ringförmigen Einlage (30) in der Form (32) vor dem gleichzeitigen Aufbringen des Füllkörpers (31) und der zweiten nicht dehnbaren ringförmigen Einfage (30) an dem Karkassenaufbau (2) zu verbinden.

29. Verfahren nach Anspruch 19, bei welchem das Aufbringen des Füllkörpers (31) dadurch ausgeführt wird, dass der Füllkörper (31) direkt an dem Karkassenaufbau (2) ausgebildet wird.

30. Verfahren nach Anspruch 29, bei welchem die Ausbildung des Füllkörpers (31) an dem Karkassenaufbau (2) durch Extrusion wenigstens eines durchgehenden streifenförmigen Elements erfolgt, das in übereinanderliegende Windungen gelegt wird.

31. Verfahren nach Anspruch 19, bei welchem die Herstellung der Karkassenlage (3) die folgenden Schritte aufweist:
- Herstellen von streifenförmigen Abschnitten (13), von denen jeder sich in Längsrichtung erstreckende und parallele fadenförmige Elemente (14) aufweist, die wenigstens teilweise mit einer Schicht aus Rohelastomermaterial (17) beschichtet sind, und
- Ablegen eines jeden der streifenförmigen Abschnitte (13) auf einem toroidförmigen Träger (11) in einer im Wesentlichen U-Form um den Querschnittsumriss des toroidförmigen Trägers herum zur Bildung von zwei Seitenteilen (25), die sich im Wesentlichen in zu einer geometrischen Drehachse des toroidförmigen Trägers (11) senkrechten Ebenen an in Axialrichtung zueinander in Abstand befindüchen Stellen, und einen Kronenteil (24) zu bilden, der sich an einer radial äußeren Stelle zwischen den Seitenteilen (25) erstreckt,
- wobei die Kronenteile (24) eines jeden streifenförmigen Abschnitts (13) aufeinanderfolgend in einer Beziehung Seite an Seite längs der Umfangserstreckung des toroidförmigen Trägers (11) angeordnet werden, während die Seitenteile (25) eines jeden streifenförmigen Abschnitts (13) jeweils teilweise mit einem Seitenteil (25) und wenigstens einem am Umfang darauf folgenden Abschnitt abgedeckt werden.

32. Verfahren nach Anspruch 31, bei welchem die Seitenteile (25), die zu dem am Umfang benachbarten streifenförmigen Abschnitten (13) auf dem toroidförmigen Träger (11) gehören, dazu gebracht werden, zueinander in der Richtung der geometrischen Drehachse des toroidförmigen Trägers zu konvergieren, wobei die Abdeckung der Seitenteile (25) eines jeden streifenförmigen Abschnitts (13) in der Richtung des inneren Umfangsrandes der Karkassenlage (3) beginnend von einem Nullwert nahe an den Übergangsbereichen zwischen den Seitenteilen (25) und den Kronenteilen (24) fortschreitend zunimmt.

33. Verfahren nach Anspruch 31, bei welchem die streifenförmigen Abschnitte (13) dadurch abgelegt werden, dass die Seitenteile (25) jedes streifenförmigen Abschnitts (13) zum Vorstehen aus einem inneren Umfangsrand (11a) des toroidförmigen Trägers (11) gebracht werden, wobei die vorstehenden Enden der Seitenteile die Endlaschen (25a) der Karkassenlage (3) bilden.

## Revendications

1. Pneu pour roues de véhicule, comprenant :
- une structure de carcasse (2) ;
- une structure de ceinture (5) appliquée à la structure de carcasse (2), en une position circonférentiellement extérieure de celle-ci ;
- une bande de roulement (8) circonférentiellement superposée sur la structure de ceinture (5) ; et
- des flancs (9) appliqués latéralement sur des côtés opposés de la structure de carcasse (2) ;
dans lequel ladite structure de carcasse comprend :
- au moins un pli de carcasse (3) comprenant des éléments de type fil (14) sensiblement disposés dans la direction transversale d'une étendue circonférentielle de la structure de carcasse (2) ;
- au moins une paire de structures de renfort annulaires (4) disposées près des bords circonférentiels intérieurs respectifs du pli de carcasse (3), chacune desdites structures de renfort annulaires (4) comprenant :
- au moins un premier insert annulaire circonférentiellement inextensible (26) sensiblement sous forme d'une couronne disposée sensiblement coaxialement à la structure de carcasse (2), près d'un bord circonférentiel intérieur du pli de carcasse (3), ledit premier insert annulaire (26) étant formé d'au moins un élément allongé s'étendant en spires concentriques (26a, 26b);
- au moins un deuxième insert annulaire circonférentiellement inextensible (30) sensiblement sous forme d'une couronne disposée coaxialement au pneu, ledit deuxième insert annulaire (30) étant formé d'au moins un élément allongé s'étendant en spires concentriques (30a),
dans lequel ledit pli de carcasse (3) comporte des prolongements d'extrémité (25a) qui sont retournés chacun autour d'un bord circonférentiel intérieur du premier insert annulaire respectif (26) et intercalés chacun axialement entre les premier et deuxième insérts annulaires respectifs (26, 30) ;
**caractérisé en ce que** chacun desdits premier et deuxième inserts annulaires circonférentiellement inextensibles (26, 30) présente un profil de section transversale radialement allongé.

2. Pneu selon la revendication 1, dans lequel ledit pli de carcasse (3) et chaque premier insert annulaire circonférentiellement inextensible (26) sont en appui l'un contre l'autre selon toute l'étendue de surface du premier insert annulaire circonférentiellement inextensible (26).

3. Pneu selon la revendication 1, dans lequel ledit pli de carcasse (3) et chaque premier insert annulaire circonférentiellement inextensible (26) sont en appui l'un contre l'autre selon toute l'étendue radiale du prolongement d'éxtrémité (25a) respectif.

4. Pneu selon la revendication 1, comprenant en outre au moins un corps de remplissage (31) en matériau élastomère en contact avec au moins l'un desdits inserts annulaires inextensibles (26, 30).

5. Pneu selon la revendication 4, dans lequel le deuxième insert annulaire inextensible (30) est intercalé entre le prolongement d'extrémité (25a) respectif et le corps de remplissage (31), ledit deuxième insert annulaire inextensible (30) étant en contact avec le prolongement d'extrémité (25a) sur le côté opposé par rapport au premier insert annulaire inextensible (26).

6. Pneu selon la revendication 1, dans lequel le prolongement d'extrémité (25a) du pli de carcasse (3) couvre complètement le premier insert annulaire inextensible (26) respectif.

7. Pneu selon la revendication 1, dans lequel le deuxième insert annulaire inextensible (30) fait saillie au-delà d'une région d'extrémité du prolongement d'extrémité (25a) respectif.

8. Pneu selon la revendication 1, dans lequel chaque deuxième insert annulaire inextensible (30) fait saillie au-delà d'un bord circonférentiel extérieur du premier insert annulaire inextensible (26).

9. Pneu selon la revendication 1, dans lequel le premier insert annulaire inextensible (26) comprend au moins une première série de spires coaxiales concentriques (26a) et une deuxième série de spires coaxiales concentriques (26b) disposées axialement. côte à côte avec les spires (26a) de la première série.

10. Pneu selon la revendication 9, dans lequel le nombre de spires (26a) de la première série est supérieur au nombre de spires (26b) de la deuxième série.

11. Pneu selon la revendication 10, dans lequel ladite première série de spires (26a) est directement en contact avec le pli de carcasse (3), tandis que la deuxième série de spires (26b) est directement en contact avec le prolongement d'extrémité respectif.

12. Pneu selon la revendication 1, dans lequel le premier insert annulaire inextensible (26) fait saillie au-delà d'une région d'extrémité du prolongement d'extrémité (25a) respectif.

13. Pneu selon la revendication 1, dans lequel le premier insert annulaire inextensible (26) fait saillie au-delà d'un bord circonférentiel extérieur du deuxième insert annulaire inextensible (30) respectif.

14. Pneu selon la revendication 4, dans lequel le corps de remplissage (31) est intercalé entre le prolongement d'extrémité (25a) respectif du pli de carcasse (3) et le deuxième insert annulaire (30) respectif.

15. Pneu selon la revendication 14, dans lequel le deuxième insert annulaire (30) est directement en contact avec au moins une surface latérale axialement extérieure du corps de remplissage (31) respectif, située du côté opposé par rapport au prolongement d'extrémité (25a) du pli de carcasse (3).

16. Pneu selon la revendication 1, dans lequel le corps de remplissage (31) a une partie circonférentiellement extérieure directement en contact avec une surface latérale du pli de carcasse (3).

17. Pneu selon la revendication 1, dans lequel ledit au moins un pli de carcasse (3) comprend :
- une pluralité de sections de type bande (13) comprenant chacune au moins deux desdits éléments de type fil (14) disposés longitudinalement et parallèlement entre eux et couverts au moins partiellement d'au moins une couche de matériau élastomère brut (17),
- chacune desdites sections de type bande (13) s'étendant en une configuration sensiblement en U selon un profil de section transversale de la structure de carcasse (2), pour définir deux parties latérales (25) s'étendant sensiblement dans des plans orthogonaux à un axe géométrique de la structure de carcasse elle-même en des positions mutuellement espacées dans une direction axiale, et une partie de sommet (24) s'étendant en une position radialement extérieure entre les parties latérales (25) ;
- lesdites parties de sommet (24) étant disposées côte à côte les unes des autres le long de l'étendue circonférentielle de la structure de carcasse (2), tandis que les parties latérales (25) de chaque section de type bande (13) sont recouvertes partiellement chacune d'une partie latérale (25) d'au moins une section de type bande (13) contiguë.

18. Pneu selon la revendication 17, dans lequel les parties latérales (25) desdites sections de type bande (13) convergent mutuellement vers l'axe géométrique de la structure de carcasse (2), le chevauchement des parties latérales (25) des sections de type bande (13) augmentant progressivement dans la direction du bord circonférentiel intérieur du pli de carcasse (3) en partant d'une valeur nulle près des régions de transition entre lesdites parties latérales (25) et lesdites parties de sommet (24).

19. Procédé de fabrication d'un pneu pour roues de véhicule, comprenant les étapes consistant à :
- former une structure de carcasse (2) ;
- appliquer une structure de ceinture (5) à la structure de carcasse (2), en une position circonférentiellement extérieure de celle-ci ;
- appliquer une bande de roulement (8) circonférentiellement superposée sur la structure de ceinture (5) ; et
- appliquer des flancs (9) latéralement sur des côtés opposés de la structure de carcasse (2) ;
dans lequel la formation de ladite structure de carcasse comprend les opérations consistant à :
- faire un pli de carcasse (3) ayant une paire de prolongements d'extrémité (25a) disposés circonférentiellement à l'intérieur ;
- appliquer au moins une structure de renfort annulaire (4) près de chaque prolongement d'extrémité (25a) du pli de carcasse (3) ;
dans lequel chaque structure de renfort annulaire (4) est formée au moyen des étapes consistant à :
- appliquer au moins un premier insert annulaire inextensible (26) près du prolongement d'extrémité (25a) respectif du pli de carcasse (3), ledit premier insert annulaire inextensible (26) étant formé d'au moins un premier élément allongé disposé en spires concentriques (26a, 26b);
- retourner le prolongement d'extrémité (25a) du pli de carcasse (3) autour d'un bord circonférentiel intérieur du premier insert annulaire (26) ;
- appliquer au moins un deuxième insert annulaire inextensible (30) près du premier insert annulaire (26), ledit deuxième insert annulaire inextensible (30) étant formé d'au moins un deuxième élément allongé disposé en spires concentriques (30a) ;
**caractérisé en ce que** chacun desdits premier et deuxième inserts annulaires circonférentiellement inextensibles (26, 30) est formé selon un profil de section transversale radialement allongé.

20. Procédé selon la revendication 19, dans lequel, par l'étape de retournement, ledit pli de carcasse (3) et ledit premier insert annulaire circonférentiellement inextensible (26) sont appliqués l'un contre l'autre selon toute l'étendue de surface du premier insert annulaire circonférentiellement inextensible (26) lui-même.

21. Procédé selon la revendication 19, dans lequel, par l'étape de retournement, ledit pli de carcasse (3) et ledit premier insert annulaire circonférentiellement inextensible (26) sont appliqués l'un contre l'autre selon toute l'étendue radiale du prolongement d'extrémité (25a) respectif.

22. Procédé selon la revendication 19, comprenant en outre l'étape consistant à appliquer au moins un corps de remplissage (31) en matériau élastomère en contact avec au moins l'un desdits inserts annulaires (26, 30).

23. Procédé selon la revendication 19, dans lequel au moins l'un desdits premier et deuxième inserts annulaires inextensibles (26, 30) est formé en enroulant un élément allongé continu en spires concentriques superposées radialement (26a, 26b, 30a).

24. Procédé selon la revendication 19, dans lequel au moins l'un desdits premier et deuxième inserts annulaires inextensibles (26, 30) est formé directement contre le pli de carcasse (3).

25. Procédé selon la revendication 19, dans lequel au moins l'un desdits premier et deuxième inserts annulaires (26, 30) est formé dans un moule de formage (27), ledit moule de formage (27) étant ensuite déplacé contre le pli de carcasse (3) pour l'application de l'insert annulaire inextensible (26, 30).

26. Procédé selon la revendication 19, dans lequel ledit retournement du prolongement d'extrémité (25a) comprend les étapes consistant à :
- pousser axialement le prolongement d'extrémité (25a) pour le déplacer d'une première position, dans laquelle il fait saillie radialement vers l'intérieur par rapport au premier insert annulaire inextensible (26), à une deuxième position, dans laquelle il est axialement orienté à l'écart d'un plan équatorial de la structure de carcasse ;
- exercer une action de roulage sur le prolongement d'extrémité (25a) pour l'appliquer latéralement contre le premier insert annulaire inextensible (26).

27. Procédé selon la revendication 22, dans lequel l'application du corps de remplissage (31) comprend les étapes consistant à :
- faire ledit corps de remplissage (31) dans un moule de formage (32);
- déplacer axialement le moule de formage (32) contre la structure de carcasse (2).

28. Procédé selon la revendication 27, comprenant en outre une étape consistant à coupler le corps de remplissage (31) au deuxième insert annulaire inextensible (30) dans le moule de formage (32), avant l'application simultanée du corps de remplissage (31) et du deuxième insert annulaire inextensible (30) contre la structure de carcasse (2).

29. Procédé selon la revendication 19, dans lequel l'application du corps de remplissage (31) est réalisée en formant le corps de remplissage (31) directement contre la structure de carcasse (2).

30. Procédé selon la revendication 29, dans lequel ladite formation du corps de remplissage (31) contre la structure de carcasse (2) se fait par extrusion d'au moins un élément continu de type bande enroulé en spires superposées.

31. Procédé selon la revendication 19, dans lequel la fabrication du pli de carcasse (3) comprend les étapes consistant à :
- préparer des sections de type bande (13) comprenant chacune des éléments de type fil (14) longitudinaux et parallèles au moins partiellement revêtus d'une couche de matériau élastomère brut (17) ;
- déposer chacune des sections de type bande (13) sur un support toroïdal (11) en une conformation sensiblement en U autour du profil de section transversale du support toroïdal, afin de définir deux parties latérales (25) s'étendant sensiblement dans des plans orthogonaux à un axe géométrique de rotation du support toroÏdal en des positions mutuellement espacées dans une direction axiale, et une partie de sommet (24) s'étendant en une position radialement extérieure entre les parties latérales (25) ;
- dans lequel les parties de sommet (24) de chaque section de type bande (13) sont disposées consécutivement côte à côte le long de l'étendue circonférentielle du support toroïdal (11), tandis que les parties latérales (25) de chaque section de type bande (13) sont toutes partiellement recouvertes d'une partie latérale (25) d'au moins une section circonférentiellement consécutive.

32. Procédé selon la revendication 31, dans lequel on fait converger mutuellement les parties latérales (25) appartenant à des sections de type bande (13) circonférentiellement contiguës sur le support toroïdal (11) dans la direction de l'axe géométrique de rotation du support toroïdal lui-même, le chevauchement des parties latérales (25) de chaque section de type bande (13) augmentant progressivement dans la direction du bord circonférentiel intérieur du pli de carcasse (3) en partant d'une valeur nulle près des régions de transition entre lesdites parties latérales (25) et lesdites parties de sommet (24).

33. Procédé selon la revendication 31, dans lequel les sections de type bande (13) sont posées en faisant saillir les parties latérales (25) de chaque section de type bande (13) depuis un bord circonférentiel intérieur (11a) du support toroïdal (11), les extrémités saillantes des parties latérales définissant les prolongements d'extrémité (25a) dudit pli de carcasse (3).
